# EUROPEAN PATENT SPECIFICATION

(11) **EP 4 378 971 B1**
(45) Date of publication and mention of the grant of the patent: **28.01.2026**
(21) Application number: 22875971.8
(22) Date of filing: 21.09.2022
(51) Int. Cl.: C08F 293/00, C08L 11/02, C08F 212/08, C08F 212/36, C08F 220/14, C08F 236/18, C08K 5/00

(54) **CHLOROPRENE BLOCK COPOLYMER, LATEX, LATEX COMPOSITION, AND RUBBER COMPOSITION**
CHLOROPRENBLOCKCOPOLYMER, LATEX, LATEXZUSAMMENSETZUNG UND KAUTSCHUKZUSAMMENSETZUNG
COPOLYMÈRE SÉQUENCÉ À BASE DE CHLOROPRÈNE, LATEX, COMPOSITION DE LATEX, ET COMPOSITION DE CAOUTCHOUC

(30) Priority: 28.09.2021 JP 2021157984
(43) Date of publication of application: 05.06.2024
(73) Proprietor: Denka Company Limited, Tokyo 103-8338 (JP)
(72) Inventor: NISHINO, Wataru, Tokyo 103-8338 (JP); SHIMOTOMAI, Ibuki, Tokyo 103-8338 (JP); SAITO, Yutaka, Tokyo 103-8338 (JP); KUMAGAI, Yushi, Tokyo 103-8338 (JP)
(74) Representative: Gulde & Partner
(86) International application number: PCT/JP2022/035140
(87) International publication number: WO 2023/054104

(56) References cited:
- EP-A1- 4 129 609
- EP-A1- 4 130 079
- EP-A1- 4 130 080
- WO-A1-2018/181801
- WO-A1-2021/193561
- WO-A1-2021/193562
- WO-A1-2021/193563
- JP-A- 2002 348 340
- JP-A- 2010 001 458
- JP-A- H03 212 414
- US-A- 3 933 754
- ISHIGAKI YUHEI; MORI HIDEHARU: "Synthesis of poly(chloroprene)-based block copolymers by RAFT-mediated emulsion polymerization", POLYMER, vol. 140, 21 February 2018 (2018-02-21), AMSTERDAM, NL, pages 198 - 207, XP085361258, ISSN: 0032-3861, DOI: 10.1016/j.polymer.2018.02.025

## Description

### Technical Field

The present invention relates to a chloroprene-based block copolymer, a latex, a latex composition, and a rubber composition.

Various technologies have been proposed for a chloroprene-based block copolymer, such as a copolymer obtained by polymerizing a chloroprene using a polystyrene containing an azo group as an initiator (see, for example, Patent Literature 1), a copolymer obtained by polymerizing a dithiocarbamated polychloroprene with an aromatic vinyl monomer (see, for example, Patent Literature 2), a copolymer in which a hydrophilic oligomer or hydrophilic polymer is linked to a chloroprene-based polymer (see, for example, Patent Literature 3), a copolymer having a block of an aromatic vinyl compound polymer and a block of a chloroprene polymer, wherein the copolymer has a specific number average molecular weight and the block of the chloroprene polymer has a specific number average molecular weight (see, for example, Patent Literature 4), and a copolymer having a block of an acrylic acid ester polymer and a block of a chloroprene polymer (see, for example, Patent Literature 5). Patent Literature 7 discloses a chloroprene-based block copolymer latex comprising a chloroprene-based block copolymer, wherein: the chloroprene-based block copolymer contains 5 to 30% by mass of a polymer block (A) and 70 to 95% by mass of a chloroprene-based polymer block (B); the polymer block (A) is derived from a monomer. Patent Literature 8 relates to an immersion-molded body, wherein: the immersion-molded body is obtained using a latex; the latex comprises a chloroprene-based block copolymer; the chloroprene-based block copolymer contains 5 to 30% by mass of a polymer block (A) and 70 to 95% by mass of a chloroprene-based polymer block (B); the polymer block (A) is derived from a monomer. Patent Literature 9 describes a chloroprene-based block copolymer, contains 5 to 30% by mass of a polymer block (A) and 70 to 95% by mass of a chloroprene-based polymer block (B), wherein the polymer block (A) is derived from a monomer when the monomer is polymerized alone, a polymer with a glass transition temperature of 80°C or higher can be obtained.

In addition, as a method for chemically bonding molecules without vulcanization, a technique described in Patent Literature 6 is known.

### Citation List

### Patent Literature

Patent Literature 1: JP-A-H3-207710
Patent Literature 2: JP-A-H3-212414
Patent Literature 3: JP-A-2007-297502
Patent Literature 4: WO2018/181801
Patent Literature 5: WO2019/026914
Patent Literature 6: JP-A-2014-221901
Patent Literature 7: EP 4 130 079 A1
Patent Literature 8: EP 4 129 609 A1
Patent Literature 9: EP 4 130080 A1

### Summary of Invention

### Technical Problem

Conventionally, in order to obtain the desired mechanical strength for polychloroprene rubber compositions, it is essential to use vulcanizing agents such as sulfur, zinc oxide and magnesium oxide, and vulcanization accelerators such as thiuram-based, dithiocarbamate-based, thiourea-based, guanidine-based, xanthate-based, thiazole-based vulcanization accelerators. Since vulcanization accelerators are causative substances of type IV allergies that cause skin diseases such as dermatitis, reducing or eliminating the use of vulcanization accelerators has become an important theme. In addition, reducing or eliminating the use of vulcanization accelerators not only reduces allergies but also leads to cost reduction, so a rubber composition that exhibits sufficient mechanical strength even with a reduced amount of vulcanization accelerator is desired.

Therefore, the present invention aims to provide a chloroprene-based block copolymer, a latex, a latex composition, and a rubber composition, with which it is possible to obtain a molded body having excellent tensile strength at break, tensile elongation at break, and 25% modulus even with use of less or no vulcanizing agent or vulcanization accelerator.

### Solution to Problem

The invention is set out in the appended set of claims. According to the present invention, there is provided a chloroprene-based block copolymer comprising 30 to 60% by mass of a polymer block (A) derived from a monomer that can yield a polymer with a glass transition temperature of 80°C or higher when homopolymerized and 40 to 70% by mass of a chloroprene-based polymer block (B) having a chloroprene monomer unit and a polyfunctional monomer unit. The polymer block (A) has a number average molecular weight of 30,000 or more.

The present inventors have made intensive studies and found that with a block copolymer containing a polymer block (A) having a structure derived from a specific type of monomer and a chloroprene-based polymer block (B) having a chloroprene monomer unit and a polyfunctional monomer unit at a specific ratio, a chloroprene-based block copolymer, a latex, a latex composition, and a rubber composition capable of obtaining a molded body having excellent tensile strength at break, tensile elongation at break, and 25% modulus even with use of less or no vulcanizing agent or vulcanization accelerator, can be obtained, and the present invention is completed.

According to another aspect of the present invention, there is provided a latex comprising the chloroprene-based block copolymer described above.

In addition, according to another aspect of the present invention, there is provided a latex composition comprising 100 parts by mass of the latex described above and 0.5 to 5.0 parts by mass of an anti-aging agent.

According to another aspect of the present invention, there is provided a rubber composition comprising the chloroprene-based block copolymer described above.

In addition, according to another aspect of the present invention, there is provided a rubber composition comprising the latex described above.

Various embodiments according to this aspect will be illustrated below. The embodiments shown below can be combined with each other.

A first aspect of the present invention is a chloroprene-based block copolymer comprising 30 to 60% by mass of a polymer block (A) derived from a monomer that can yield a polymer with a glass transition temperature of 80°C or higher when homopolymerized and 40 to 70% by mass of a chloroprene-based polymer block (B) having a chloroprene monomer unit and a polyfunctional monomer unit. The polymer block (A) has a number average molecular weight of 30,000 or more.

In an embodiment, a molded body of a latex composition comprising the chloroprene-based block copolymer has a 25% modulus of 2.5 MPa or more, as measured in accordance with JIS K 6251 after being heat-treated at 130°C for 30 minutes.

In an embodiment, a molded body of a latex composition comprising the chloroprene-based block copolymer has a tensile strength at break of 20 MPa or more, as measured in accordance with JIS K 6251 after being heat-treated at 130°C for 30 minutes.

In an embodiment, the polymer block (A) has a molecular weight distribution of 2.0 or less.

In an embodiment, the polymer block (A) is a polymer block comprising an aromatic vinyl monomer unit.

In an embodiment, the polyfunctional monomer is a monomer represented by chemical formula (1) or an aromatic polyene monomer. 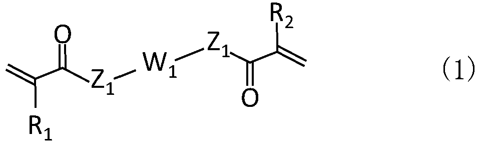 in chemical formula (1), R₁ and R₂ each independently represent hydrogen, chlorine, a substituted or unsubstituted alkyl group, a substituted or unsubstituted alkenyl group, a substituted or unsubstituted aryl group, a substituted or unsubstituted mercapto group, or a substituted or unsubstituted heterocyclyl group. W₁ represents a saturated or unsaturated hydrocarbon group, a saturated or unsaturated cyclic hydrocarbon group, a saturated or unsaturated hydrocarbon group containing a heteroatom(s), or a saturated or unsaturated cyclic hydrocarbon group containing a heteroatom(s). Z₁ represents oxygen, sulfur, or a structure represented by-NR₀-. R₀ represents hydrogen, chlorine, a substituted or unsubstituted alkyl group, a substituted or unsubstituted alkenyl group, a substituted or unsubstituted aryl group, a substituted or unsubstituted mercapto group, or a substituted or unsubstituted heterocyclyl group.
In an embodiment, the chloroprene-based block copolymer has a functional group with a structure represented by chemical formula (2) or chemical formula (3); 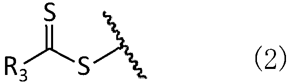 in chemical formula (2), R₃ represents hydrogen, chlorine, a substituted or unsubstituted alkyl group, a substituted or unsubstituted alkenyl group, a substituted or unsubstituted aryl group, a substituted or unsubstituted mercapto group, or a substituted or unsubstituted heterocyclyl group.

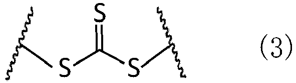

A second aspect of the invention is a latex comprising the chloroprene-based block copolymer of the first aspect.

A further aspect is a latex composition comprising 100 parts by mass of the latex of the second aspect and 0.5 to 5.0 parts by mass of an anti-aging agent.

A further aspect is a rubber composition comprising the chloroprene-based block copolymer of the first aspect.

Another aspect is a rubber composition comprising the latex of the second aspect.

### Effects of Invention

According to the present invention, a chloroprene-based block copolymer, a latex, a latex composition, and a rubber composition, with which it is possible to obtain a molded body having excellent tensile strength at break, tensile elongation at break, and 25% modulus even with use of less or no vulcanizing agent or vulcanization accelerator, can be obtained.

### Description of Embodiments

Hereinafter, the present invention will be described in detail by exemplifying embodiments of the present invention. The present invention is not limited by these descriptions. Various features of embodiments of the present invention described below can be combined with each other. In addition, the invention is established independently for each feature.

Note that in this specification and claims, the expression "A to B" means greater than or equal to A and less than or equal to B.

### <Chloroprene-based block copolymer >

The chloroprene-based block copolymer is a block copolymer containing a polymer block (A) derived from a monomer that can yield a polymer with a glass transition temperature of 80°C or higher when homopolymerized, and a chloroprene-based polymer block (B) having a chloroprene monomer unit and a polyfunctional monomer unit. The chloroprene-based block copolymer also includes those having a structure in which block copolymers are chemically bonded to each other via the polyfunctional monomer unit contained in the chloroprene-based polymer block (B).

### [Polymer Block (A)]

The polymer block (A) is a polymer block derived from a monomer that can yield a polymer with a glass transition temperature of 80°C or higher when homopolymerized. By using such a monomer, the tensile strength at break of the resulting chloroprene-based block copolymer is improved. It is preferable to use a monomer that can yield a polymer with a glass transition temperature of 85°C or higher. From the viewpoint of moldability, a monomer that can yield a polymer with a glass transition temperature of 150°C or lower is preferable, and particularly preferred is a monomer that can yield a polymer with a glass transition temperature of 120°C or lower. The glass transition temperature is, for example, 80, 85, 90, 95, 100, 105, 110, 120, 130, 140, 150°C, and may be within the range between any two of the numerical values exemplified here.

In this specification, the glass transition temperature is the extrapolated glass transition ending temperature (Teg) measured in accordance with JIS K 7121, and as an example, it can be measured using a differential scanning calorimeter and using DSC1 (manufactured by Mettler Toledo International Inc.).

When the polymer block (A) is a polymer block obtained by polymerizing monomer (A), the monomer (A) is preferably a monomer with which a homopolymer (A) having a number average molecular weight of 30000 to 100000 is obtained by homopolymerizing the monomer (A) and the homopolymer (A) has the above-mentioned glass transition temperature, and is more preferably a monomer with which a homopolymer (A) having a number average molecular weight of 30000 to 700000 is obtained and the homopolymer (A) has the above-mentioned glass transition temperature.

Examples of the monomer unit constituting the polymer block (A) include an aromatic vinyl monomer unit, a methyl methacrylate monomer unit, and an acrylonitrile monomer unit. Units derived from aromatic vinyl monomers are preferably used, and styrene units are preferably used. The polymer block (A) may be a polymer block obtained by copolymerization of these monomers, or a polymer block containing monomer units copolymerizable with these monomers as long as the object of the present invention is not impaired.

The number average molecular weight of the polymer block (A) is 30,000 or more from the viewpoint of tensile properties and moldability of the resulting chloroprene-based block copolymer. The number average molecular weight of the polymer block (A) is, for example, 30000, 35000, 40000, 45000, 50000, 55000, 60000, 65000, 70000, 75000, 80000, 85000, 90000, 95000, 100000, and may be within the range between any two of the numerical values exemplified here. In addition, the molecular weight distribution of the polymer block (A) is preferably 2.0 or less from the viewpoint of moldability. The molecular weight distribution of the polymer block (A) can be, for example, 1.0, 1.1, 1.2, 1.3, 1.4, 1.5, 1.6, 1.7, 1.8, 1.9, 2.0, and may be within the range between any two of the numerical values exemplified here.

In addition, in this specification, the number average molecular weight and the weight average molecular weight are values in terms of polystyrene measured by gel permeation chromatography (GPC), and are measured values under the measurement conditions described below.
Device name: HLC-8320 (manufactured by Tosoh Corporation)
Column: 3 TSKgel GMHHR-H in series
Temperature: 40°C
Detection: differential refractometer
Solvent: tetrahydrofuran
Calibration curve: created using standard polystyrene (PS).

### [Chloroprene-based Polymer Block (B)]

The chloroprene-based polymer block (B) is a polymer block having a chloroprene monomer (2-chloro-1,3-butadiene) unit and a polyfunctional monomer unit. In addition, the chloroprene-based polymer block (B) may be a polymer block consisting of a chloroprene monomer unit, a polyfunctional monomer unit, and monomer units copolymerizable with these monomers, as long as the object of the present invention is not impaired.

The content of each structural unit in the chloroprene polymer block (B) is not particularly limited, but is preferably 90 to 99.95% by mass for the chloroprene monomer unit and 0.05 to 10% by mass for the polyfunctional monomer unit. The content of the polyfunctional monomer unit in the chloroprene polymer block (B) is, for example, 0.05, 0.50, 1.00, 2.00, 3.00, 4.00, 5.00, 6.00, 7.00, 8.00, 9.00, 10.00% by mass, and may be within the range between any two of the numerical values exemplified here.

### [Polyfunctional Monomer]

The polyfunctional monomer according to the present invention is a compound having two or more radical polymerizable groups in the molecule. The polyfunctional monomer preferably has a plurality of mutually independent polymerizable substituents. The polyfunctional monomer preferably has at least one set of non-conjugated polymerizable substituents. Among the plurality of polymerizable substituents, at least one set of polymerizable substituents are preferably separated from each other by sandwiching at least one atom, preferably separated by sandwiching three or more atoms, and preferably separated by sandwiching five or more atoms. The polymerizable substituent can be a vinyl group, and can be a carbon-carbon double bond. From the viewpoint of flexibilit, tensile strength at break, and moldability of the resulting chloroprene-based block copolymer, the monomer represented by chemical formula (1) and an aromatic polyene monomer are preferably used. As the monomer represented by chemical formula (1), 1,9-nonanediol dimethacrylate, 1,9-nonanediol diacrylate, neopentyl glycol dimethacrylate, neopentyl glycol diacrylate, 1,6-hexanediol dimethacrylate, 1,6-hexanediol diacrylate, ethylene glycol dimethacrylate, diethylene glycol dimethacrylate, triethylene glycol dimethacrylate, triethylene glycol diacrylate, polyethylene glycol dimethacrylate, polyethylene glycol diacrylate, N,N'-diacryloyl-4,7,10-trioxa-1,13-tridecanediamine are particularly preferably used. The aromatic polyene monomer is an aromatic polyene having 10 or more and 30 or less carbon atoms and having multiple double bonds (vinyl groups) and one or more aromatic groups, examples thereof include units derived from aromatic polyene monomers such as o-divinylbenzene, p-divinylbenzene, m-divinylbenzene, 1,4-divinylnaphthalene, 3,4-divinylnaphthalene, 2,6-divinylnaphthalene, 1,2-divinyl-3,4-dimethylbenzene, 1,3-divinyl-4,5,8-tributylnaphthalene, and preferably any one or a mixture of two or more of orthodivinylbenzene unit, paradivinylbenzene unit, and metadivinylbenzene unit is suitably used.

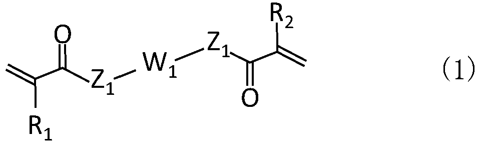

In chemical formula (1), R₁ and R₂ each independently represent hydrogen, chlorine, a substituted or unsubstituted alkyl group, a substituted or unsubstituted alkenyl group, a substituted or unsubstituted aryl group, a substituted or unsubstituted mercapto group, or a substituted or unsubstituted heterocyclyl group. W₁ represents a saturated or unsaturated hydrocarbon group, a saturated or unsaturated cyclic hydrocarbon group, a saturated or unsaturated hydrocarbon group containing a heteroatom(s), or a saturated or unsaturated cyclic hydrocarbon group containing a heteroatom(s). Z₁ represents oxygen, sulfur, or a structure represented by-NR₀-. R₀ represents hydrogen, chlorine, a substituted or unsubstituted alkyl group, a substituted or unsubstituted alkenyl group, a substituted or unsubstituted aryl group, a substituted or unsubstituted mercapto group, or a substituted or unsubstituted heterocyclyl group.

Examples of monomer units copolymerizable with chloroprene monomer unit and polyfunctional monomer unit include 2,3-dichloro-1,3-butadiene, 1-chloro-1,3-butadiene, styrene, acrylonitrile, methacrylonitrile, isoprene, and butadiene.

In addition, polyfunctional monomer may not contain 2,3-dichloro-1,3-butadiene, 1-chloro-1,3-butadiene, styrene, acrylonitrile, methacrylonitrile, isoprene, or butadiene.

The chloroprene copolymer according to one embodiment of the present invention may have a chloroprene monomer unit and a polyfunctional monomer unit derived from a polyfunctional monomer other than 2,3-dichloro-1,3-butadiene, 1-chloro-1,3-butadiene, styrene, acrylonitrile, methacrylonitrile, isoprene, and butadiene. In addition, the chloroprene copolymer according to one embodiment of the present invention may have
a chloroprene monomer unit,
a polyfunctional monomer unit derived from a polyfunctional monomer other than 2,3-dichloro-1,3-butadiene, 1-chloro-1,3-butadiene, styrene, acrylonitrile, methacrylonitrile, isoprene and butadiene, and
monomer units copolymerizable with the chloroprene monomer unit and the polyfunctional monomer unit.

The content of each structural unit of the chloroprene-based block copolymer is 30 to 60% by mass for the polymer block (A) and 40 to 70% by mass for the chloroprene-based polymer block (B), preferably more than 30% by mass and 60% by mass or less for the polymer block (A) and 40% by mass or more and less than 70% by mass for the chloroprene-based polymer block (B). When the polymer block (A) is equal to or more than the above lower limit, the tensile strength at break of the resulting chloroprene-based block copolymer is improved. When the polymer block (A) is equal to or less than the above upper limit, the elongation at break is improved. When the chloroprene-based block copolymer is 100% by mass, the content of the polymer block (A) contained in the chloroprene-based block copolymer is, for example, 30, 31, 32, 33, 34, 35, 40, 45, 50, 55, 60% by mass, and can be more than 30% by mass, and may be within the range between any two of the numerical values exemplified here.

The chloroprene-based block copolymer according to one embodiment of the present invention may consist of a polymer block (A) and a polymer block (B), and may not contain other polymer blocks. The chloroprene-based block copolymer can be a diblock copolymer of polymer block (A)-polymer block (B).

The weight average molecular weight of the chloroprene-based block copolymer is not particularly limited, but from the viewpoint of moldability, it is preferably 50,000 to 600,000, particularly preferably 100,000 to 500,000.

As for the chloroprene-based block copolymer of this embodiment, a molded body of a latex composition containing the chloroprene-based block copolymer preferably has a tensile strength at break of 20 MPa or more, as measured in accordance with JIS K 6251 after being heat-treated at 130°C for 30 minutes. The tensile strength at break is more preferably more than 25 MPa, even more preferably 30 MPa or more, and even more preferably 32 MPa or more. The upper limit is not particularly limited, but is, for example, 50 MPa or less.

In addition, as for the chloroprene-based block copolymer of this embodiment, a molded body of a latex composition containing the chloroprene-based block copolymer preferably has an elongation at break of 450% or more, as measured in accordance with JIS K 6251 after being heat-treated at 130°C for 30 minutes, more preferably 600% or more, and even more preferably 800% or more. The upper limit is not particularly limited, but is, for example, 1300% or less.

As for the chloroprene-based block copolymer of this embodiment, a molded body of a latex composition containing the chloroprene-based block copolymer preferably has a modulus at 25% elongation of 2.5 MPa or more, as measured in accordance with JIS K 6251 after being heat-treated at 130°C for 30 minutes, more preferably 3.0 MPa or more, and even more preferably more than 5.0 MPa. The upper limit is not particularly limited, but is for example, 9.0 MPa or less.

As for the chloroprene-based block copolymer of this embodiment, a molded body made of a latex composition including the chloroprene-based block copolymer and a molded body made of a rubber composition containing the chloroprene-based block copolymer can have the above-mentioned tensile strength, elongation at break, and modulus at 25% elongation after being heat-treated at 130°C for 30 minutes. The molded body can be molded without using a vulcanizing agent or a vulcanization accelerator. The molded body for measuring tensile strength can be obtained by the method described in Examples.

To adjust the tensile strength at break, elongation at break, and modulus at 25% elongation of a molded body of a latex composition containing the chloroprene-based block copolymer, the content of the polyfunctional monomer unit contained in the chloroprene-based polymer block (B) can be adjusted, or the content of the polymer block (A) in the chloroprene-based block copolymer can be adjusted.

### [Method for producing chloroprene-based block copolymer]

The method for producing the chloroprene-based block copolymer according to the present invention will be described. The polymerization method is not particularly limited, it can be produced by a known method such as solution polymerization, emulsion polymerization, and bulk polymerization. The emulsion polymerization is suitable for obtaining the desired chloroprene-based block copolymer.

The polymerization method is not particularly limited as long as the desired chloroprene-based block copolymer is obtained, and the production is preferably carried out by a production method that involves a two-step polymerization process consisting of a polymerization step 1 for synthesizing the polymer block (A), followed by a polymerization step 2 for synthesizing the chloroprene-based polymer block (B).

### (Polymerization step 1)

In the polymerization step 1, the monomers constituting the polymer block (A) are subjected to living radical polymerization to synthesize the polymer block (A). As described above, the polymer block (A) obtained here preferably has the above-mentioned glass transition temperature. The emulsifier used in polymerization is not particularly limited, and anionic or nonionic emulsifiers are preferable from the viewpoint of emulsion stability. In particular, it is preferable to use alkali metal salts of rosin acid because they can impart appropriate strength to the resulting chloroprene-based block copolymer to prevent excessive shrinkage and breakage. The concentration of the emulsifier is preferably 5 to 50% by mass with respect to 100% by mass of monomers constituting the polymer block (A), from the viewpoint of efficiently carrying out the polymerization reaction. As the radical polymerization initiator, known radical polymerization initiators can be used, such as potassium persulfate, benzoyl peroxide, hydrogen peroxide, azo compounds. The polymerization temperature may be appropriately determined depending on the type of monomer, and is preferably 10 to 100°C, and particularly preferably 20 to 80°C.

### (Polymerization step 2)

In the polymerization step 2, a chloroprene monomer and a polyfunctional monomer are added to the latex containing the polymer block (A) obtained in the above polymerization step 1, and polymerized to obtain a latex containing the desired chloroprene-based block copolymer. The chloroprene monomer and polyfunctional monomer may be added all at once or in batches. The polymerization temperature in the polymerization step 2 is preferably 10 to 50°C, from the viewpoint of ease of polymerization control. The polymerization reaction is stopped by adding a polymerization terminator. Examples of the polymerization terminator include thiodiphenylamine, 4-tert-butylcatechol, 2,2'-methylenebis-4-methyl-6-tert-butylphenol. Unreacted monomers after completion of polymerization can be removed by conventional methods such as vacuum distillation.

A freeze stabilizer, an emulsion stabilizer, a viscosity modifier, an antioxidant, a preservative or the like can be optionally added to the latex containing the chloroprene-based block copolymer obtained in polymerization step 2 after polymerization, as long as the object of the present invention is not impaired.

### (Recovery step)

There is no specific limitation on the method for recovering the chloroprene-based block copolymer from the latex containing the chloroprene-based block copolymer, and known methods can be used, such as a method for recovering by immersing it in a coagulating solution, and a method for precipitating it with a poor solvent such as methanol.

The chloroprene-based block copolymer preferably has a functional group having a structure represented by the following chemical formula (2) or chemical formula (3).

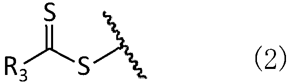

In chemical formula (2), R₃ represents hydrogen, chlorine, a substituted or unsubstituted alkyl group, a substituted or unsubstituted alkenyl group, a substituted or unsubstituted aryl group, a substituted or unsubstituted mercapto group, or a substituted or unsubstituted heterocyclyl group.

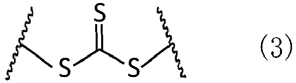

The terminal structure represented by the above chemical formula (2) or chemical formula (3) is introduced into the chloroprene-based block copolymer by polymerization in the presence of a known RAFT agent. The compound that derives the structure represented by the above chemical formula (2) is not particularly limited, and general compounds can be used, such as dithiocarbamates and dithioesters. Specifically, examples include benzyl 1-pyrrole carbodithioate (common name: benzyl 1-pyrrole dithiocarbamate), benzylphenylcarbodithioate, 1-benzyl-N,N-dimethyl-4-aminodithiobenzoate, 1-benzyl-4-methoxydithiobenzoate, 1-phenylethylimidazole carbodithioate (common name: 1-phenylethylimidazole dithiocarbamate), benzyl-1-(2-pyrrolidinone)carbodithioate) (common name: benzyl-1-(2-pyrrolidinone)dithiocarbamate), benzylphthalimidylcarbodithioate (common name: benzylphthalimidyldithiocarbamate), 2-cyanoprop-2-yl-1-pyrrole carbodithioate (common name: 2-cyanoprop-2-yl-1-pyrrole dithiocarbamate), 2-cyanobut-2-yl-1-pyrrole carbodithioate (common name: 2-cyanobut-2-yl-1-pyrrole dithiocarbamate), benzyl-1-imidazole carbodithioate (common name: benzyl-1-imidazole dithiocarbamate), 2-cyanoprop-2-yl-N,N-dimethyldithiocarbamate, benzyl-N,N-diethyldithiocarbamate, cyanomethyl-1-(2-pyrrolidone)dithiocarbamate, 2-(ethoxycarbonylbenzyl) prop-2-yl-N,N-diethyldithiocarbamate, 1-phenylethyldithiobenzoate, 2-phenylprop-2-yldithiobenzoate, 1-acetic acid-1-yl-ethyldithiobenzoate, 1-(4-methoxyphenyl)ethyldithiobenzoate, benzyldithioacetate, ethoxycarbonylmethyldithioacetate, 2-(ethoxycarbonyl) prop-2-yldithiobenzoate, 2-cyanoprop-2-yldithiobenzoate, tert-butyldithiobenzoate, 2,4,4-trimethylpenta-2-yldithiobenzoate, 2-(4-chlorophenyl)-prop-2-yldithiobenzoate, 3-vinylbenzyldithiobenzoate, 4-vinylbenzyldithiobenzoate, benzyldiethoxyphosphinyl dithioformate, tert-butyltrithioperbenzoate, 2-phenylprop-2-yl-4-chlorodithiobenzoate, naphthalene-1-carboxylic acid-1-methyl-1-phenyl-ethyl ester, 4-cyano-4-methyl-4-thiobenzylsulfanylbutyric acid, dibenzyltetrathioterephthalate, carboxymethyldithiobenzoate, poly(ethylene oxide) with dithiobenzoate end group, poly(ethylene oxide) with 4-cyano-4-methyl-4-thiobenzylsulfanylbutyric acid end group, 2-[(2-phenylethanethioyl)sulfanyl]propanoic acid, 2-[(2-phenylethanethioyl)sulfanyl]succinic acid, potassium 3,5-dimethyl-1H-pyrazole-1-carbodithioate, cyanomethyl-3,5-dimethyl-1H-pyrazole-1-carbodithioate, cyanomethylmethyl-(phenyl)dithiocarbamate, benzyl-4-chlorodithiobenzoate, phenylmethyl-4-chlorodithiobenzoate, 4-nitrobenzyl-4-chlorodithiobenzoate, phenylprop-2-yl-4-chlorodithiobenzoate, 1-cyano-1-methylethyl-4-chlorodithiobenzoate, 3-chloro-2-butenyl-4-chlorodithiobenzoate, 2-chloro-2-butenyldithiobenzoate, benzyldithioacetate, 3-chloro-2-butenyl-1H-pyrrole-1-dithiocarboxylic acid, 2-cyanobutane-2-yl-4-chloro-3,5-dimethyl-1H-pyrazole-1-carbodithioate, cyanomethylmethyl(phenyl)carbamodithioate. Among these, benzyl 1-pyrrole carbodithioate and benzylphenylcarbodithioate are particularly preferably used.

The compound that derives the structure represented by the above chemical formula (3) is not particularly limited, and general compounds can be used, and examples thereof include trithiocarbonates such as 2-cyano-2-propyldodecyltrithiocarbonate, dibenzyl trithiocarbonate, butylbenzyl trithiocarbonate, 2-[[(butylthio)thioxomethyl]thio]propionic acid, 2-[[(dodecylthio)thioxomethyl]thio]propionic acid, 2-[[(butylthio)thioxomethyl]thio]succinic acid, 2-[[(dodecylthio)thioxomethyl]thio]succinic acid, 2-[[(dodecylthio)thioxomethyl]thio]-2-methylpropionic acid, 2,2'-[carbonothioylbis(thio)]bis[2-methylpropionic acid], 2-amino-1-methyl-2-oxoethylbutyltrithiocarbonate, benzyl 2-[(2-hydroxyethyl)amino]-1-methyl-2-oxoethyltrithiocarbonate, 3-[[[(tert-butyl)thio]thioxomethyl]thio]propionic acid, cyanomethyldodecyltrithiocarbonate, diethylaminobenzyltrithiocarbonate, dibutylaminobenzyltrithiocarbonate. Among these, dibenzyl trithiocarbonate and butylbenzyl trithiocarbonate are particularly preferably used.

### <Latex>

The latex according to this embodiment is a latex containing the above-described chloroprene-based block copolymer. A dip-molded body can be obtained by immersing this latex in a coagulating solution and molding. The dip-molded body can be suitably used for gloves, balloons, catheters or boots.

The latex of this embodiment can be obtained by a method of using the solution at the end of polymerization obtained by the polymerization method as described in the method for producing chloroprene-based block copolymer, as the latex as it is, or a method of forcibly emulsifying the recovered chloroprene-based block copolymer using an emulsifier to obtain the latex. The method of using the solution at the end of polymerization obtained by the polymerization as the latex as it is, is preferable because the latex can be easily obtained.

### <Latex composition and rubber composition>

The latex composition according to this embodiment contains the chloroprene-based block copolymer. The rubber composition according to this embodiment is also a rubber composition containing the above-described chloroprene-based block copolymer. Raw materials other than the chloroprene-based block copolymer are not particularly limited, and can be appropriately selected according to the purpose and application. Examples of the raw materials, which can be included in the latex composition/rubber composition containing the chloroprene-based block copolymer, include vulcanizing agents, vulcanization accelerators, fillers or reinforcing agents, plasticizers, processing aids and lubricants, anti-aging agents, silane coupling agents. The rubber composition according to one embodiment of the present invention may also consist of the above latex. In addition, the rubber composition according to one embodiment of the present invention may also consist of the latex composition.

The latex composition and/or rubber composition of this embodiment may also contain a vulcanizing agent or a vulcanization accelerator. When the latex composition and/or rubber composition according to one embodiment of the present invention contains a vulcanizing agent and/or a vulcanization accelerator, the total content of the vulcanizing agent and the vulcanization accelerator can be 5% by mass or less, more preferably 1% by mass or less, and even more preferably 0.1% by mass, when the latex composition/rubber composition is 100% by mass. However, the latex composition/rubber composition of this embodiment exhibits sufficient mechanical strength even without vulcanization. Therefore, from the viewpoint of reduction of allergies and the cost reduction, those containing neither a vulcanizing agent nor vulcanization accelerator are preferable.

An anti-aging agent is used to improve the heat resistance of rubber compositions, and includes a primary anti-aging agent that captures radicals and prevents auto-oxidation and a secondary anti-aging agent that makes hydroperoxide harmless. The amount of these anti-aging agents added can respectively be 0.1 parts by mass or more and 10 parts by mass or less, preferably 2 parts by mass or more and 5 parts by mass or less, with respect to 100 parts by mass of the latex component in the latex composition/rubber composition. These anti-aging agents can be used not only alone but also in combination of two or more. Examples of the primary anti-aging agent include phenol-based anti-aging agents, amine-based anti-aging agents, acrylate-based anti-aging agents, imidazole-based anti-aging agents, metal salts of carbamic acid, and waxes. In addition, examples of the secondary anti-aging agent include phosphorus-based anti-aging agents, sulfur-based anti-aging agents, and imidazole-based anti-aging agents. Examples of the anti-aging agent are not particularly limited, and may include N-phenyl-1-naphthylamine, alkylated diphenylamine, octylated diphenylamine, 4,4'-bis(α,α-dimethylbenzyl)diphenylamine, p-(p-toluenesulfonylamide)diphenylamine, N,N'-di-2-naphthyl-p-phenylenediamine, N,N'-diphenyl-p-phenylenediamine, N-phenyl-N'-isopropyl-p-phenylenediamine, N-phenyl-N'-(1,3-dimethylbutyl)-p-phenylenediamine, N-phenyl-N'-(3-methacryloyloxy-2-hydroxypropyl)-p-phenylenediamine, 1,1,3-tris-(2-methyl-4-hydroxy-5-t-butylphenyl)butane, 4,4'-butylidenebis-(3-methyl-6-t-butylphenol), 2,2-thiobis(4-methyl-6-t-butylphenol), 7-octadecyl-3-(4'-hydroxy-3',5'-di-t-butylphenyl) propionate, tetrakis-[methylene-3-(3',5'-di-t-butyl-4'-hydroxyphenyl) propionate]methane, pentaerythritol-tetrakis[3-(3,5-di-t-butyl-4-hydroxyphenyl) propionate], triethylene glycol-bis[3-(3-t-butyl-5-methyl-4-hydroxyphenyl) propionate], 1,6-hexanediol-bis[3-(3,5-di-t-butyl-4-hydroxyphenyl) propionate], 2,4-bis(n-octylthio)-6-(4-hydroxy-3,5-di-t-butylanilino)-1,3,5-triazine, tris-(3,5-di-t-butyl-4-hydroxybenzyl)-isocyanurate, 2,2-thiodiethylene bis[3-(3,5-di-t-butyl-4-hydroxyphenyl) propionate], N,N'-hexamethylenebis(3,5-di-t-butyl-4-hydroxy)-hydrocinnamide, 2,4-bis[(octylthio)methyl]-o-cresol, 3,5-di-t-butyl-4-hydroxybenzyl-phosphonate-diethyl ester, tetrakis[methylene(3,5-di-t-butyl-4-hydroxyhydrocinnamate)]methane, octadecyl-3-(3,5-di-t-butyl-4-hydroxyphenyl)propionic acid ester, 3,9-bis[2-{3-(3-t-butyl-4-hydroxy-5-methylphenyl)propionyloxy}-1,1-dimethylethyl]-2,4,8,10-tetraoxaspiro[5.5]undecane, tris(nonylphenyl) phosphite, tris(mixed mono- and dinonylphenyl) phosphite, diphenyl mono(2-ethylhexyl) phosphite, diphenyl monotridecyl phosphite, diphenyl isodecyl phosphite, diphenyl isooctyl phosphite, diphenyl nonylphenyl phosphite, triphenylphosphite, tris(tridecyl) phosphite, triisodecylphosphite, tris(2-ethylhexyl) phosphite, tris(2,4-di-t-butylphenyl) phosphite, tetraphenyldipropylene glycol diphosphite, tetraphenyltetra(tridecyl)pentaerythritol tetraphosphite, 1,1,3-tris(2-methyl-4-di-tridecylphosphite-5-t-butylphenyl)butane, 4,4'-butylidenebis-(3-methyl-6-t-butyl-di-tridecylphosphite), 2,2'-ethylidenebis(4,6-di-t-butylphenol)fluorophosphite, 4,4'-isopropylidene-diphenolalkyl (C12 to C15) phosphite, cyclic neopentane tetraylbis(2,4-di-t-butylphenylphosphite), cyclic neopentane tetraylbis(2,6-di-t-butyl-4-phenylphosphite), cyclic neopentane tetraylbis(nonylphenylphosphite), bis(nonylphenyl)pentaerythritol diphosphite, dibutyl hydrogen phosphite, distearyl pentaerythritol diphosphate and hydrogenated bisphenol A pentaerythritol phosphite polymer, 2-mercaptobenzimidazole, butylated reaction product of p-cresol and dicyclopentadiene.

The rubber composition can be produced according to a conventional method using a known machine or device.

### Example

Hereinafter, the present invention will be described with reference to Examples and Comparative Examples, but these are merely exemplary and do not limit the content of the present invention.

### (Example 1)

### (Polymerization step 1) Synthesis of polymer block (A-1)

Polymerization was carried out using an autoclave with a capacity of 10 L and equipped with a stirrer and a jacket for heating and cooling. 4666g of pure water, 224g of disproportionated potassium rosinate (manufactured by Harima Chemicals Group, Inc.), 36.4g of potassium hydroxide, 18.7g of sodium salt of β-naphthalenesulfonic acid formalin condensate (manufactured by Kao Corporation, product name: DEMOL N), 1119g of styrene monomer, and 6.38g of butylbenzyl trithiocarbonate were charged, the internal temperature was set to 80°C and the mixture was stirred under a nitrogen flow at 200 rpm. By adding 4.01g of 2,2'-azobis[2-(2-imidazolin-2-yl)propane] dihydrochloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2.

The sampled latex was mixed with a large amount of methanol to precipitate the resin component, and the precipitate was filtered and dried to obtain a sample of the polymer block (A-1). The number average molecular weight and molecular weight distribution of the polymer block (A-1) was determined by analyzing the obtained sample. Analysis results of number average molecular weight are shown in Table 1. The molecular weight distribution was 1.43. In addition, it was confirmed that the glass transition temperature of the polymer block (A-1) was 100°C. The measurement method will be described later.

### (Polymerization step 2) Synthesis of chloroprene-based polymer block (B-1)

After polymerization step 1, when the internal temperature has fallen to 45°C, 3198g of chloroprene monomer and 65.3g of 1,9-nonanediol diacrylate were slowly added over 2 hours to carry out polymerization. When the polymerization rate of chloroprene monomer reaches 80%, the polymerization was stopped by adding a 10% by weight aqueous solution of N,N-diethylhydroxylamine, which was a polymerization terminator, and the unreacted chloroprene monomer was removed by vacuum distillation. For the measurement of physical properties, 20 ml of the obtained latex was sampled, and the remaining latex was used to prepare a film for evaluation.

The sampled latex was mixed with a large amount of methanol to precipitate the resin component, and the precipitate was filtered and dried to obtain a sample of the chloroprene-based block copolymer. The contents (% by mass) of the polymer block (A-1) and the chloroprene-based polymer block (B-1) of the chloroprene-based block copolymer were determined by analyzing the obtained sample. Analysis results are shown in Table 1. The measurement method will be described later.

### (Example 2)

### (Polymerization step 1) Synthesis of polymer block (A-2)

Polymerization was carried out using an autoclave with a capacity of 10 L and equipped with a stirrer and a jacket for heating and cooling. 4666g of pure water, 224g of disproportionated potassium rosinate (manufactured by Harima Chemicals Group, Inc.), 36.4g of potassium hydroxide, 18.7g of sodium salt of β-naphthalenesulfonic acid formalin condensate (manufactured by Kao Corporation, product name: DEMOL N), 1733g of styrene monomer, and 6.59g of butylbenzyl trithiocarbonate were charged, the internal temperature was set to 80°C and the mixture was stirred under a nitrogen flow at 200 rpm. By adding 4.14g of 2,2'-azobis[2-(2-imidazolin-2-yl)propane] dihydrochloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight of the polymer block (A-2) was determined by analysis in the same manner as in Example 1. Analysis results are shown in Table 1.

### (Polymerization step 2) Synthesis of chloroprene-based polymer block (B-2)

After polymerization step 1, when the internal temperature has fallen to 45°C, 2595g of chloroprene monomer and 53.0g of 1,9-nonanediol diacrylate were slowly added over 2 hours to carry out polymerization. When the polymerization rate of chloroprene monomer reaches 80%, the polymerization was stopped by adding a 10% by weight aqueous solution of N,N-diethylhydroxylamine, which was a polymerization terminator, and the unreacted chloroprene monomer was removed by vacuum distillation. For the measurement of physical properties, 20 ml of the obtained latex was sampled, and the remaining latex was used to prepare a film for evaluation. The contents (% by mass) of the polymer block (A-2) and the chloroprene-based polymer block (B-2) of the chloroprene-based block copolymer were determined by analysis in the same manner as in Example 1. Analysis results are shown in Table 1.

### (Example 3)

### (Polymerization step 1) Synthesis of polymer block (A-3)

Polymerization was carried out using an autoclave with a capacity of 10 L and equipped with a stirrer and a jacket for heating and cooling. 4666g of pure water, 224g of disproportionated potassium rosinate (manufactured by Harima Chemicals Group, Inc.), 36.4g of potassium hydroxide, 18.7g of sodium salt of β-naphthalenesulfonic acid formalin condensate (manufactured by Kao Corporation, product name: DEMOL N), 2390g of styrene monomer, and 6.81g of butylbenzyl trithiocarbonate were charged, the internal temperature was set to 80°C and the mixture was stirred under a nitrogen flow at 200 rpm. By adding 4.29g of 2,2'-azobis[2-(2-imidazolin-2-yl)propane] dihydrochloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight of the polymer block (A-3) was determined by analysis in the same manner as in Example 1. Analysis results are shown in Table 1.

### (Polymerization step 2) Synthesis of chloroprene-based polymer block (B-3)

After polymerization step 1, when the internal temperature has fallen to 45°C, 1952g of chloroprene monomer and 39.8g of 1,9-nonanediol diacrylate were slowly added over 2 hours to carry out polymerization. When the polymerization rate of chloroprene monomer reaches 80%, the polymerization was stopped by adding a 10% by weight aqueous solution of N,N-diethylhydroxylamine, which was a polymerization terminator, and the unreacted chloroprene monomer was removed by vacuum distillation. For the measurement of physical properties, 20 ml of the obtained latex was sampled, and the remaining latex was used to prepare a film for evaluation. The contents (% by mass) of the polymer block (A-3) and the chloroprene-based polymer block (B-3) of the chloroprene-based block copolymer were determined by analysis in the same manner as in Example 1. Analysis results are shown in Table 1.

### (Example 4)

### (Polymerization step 1) Synthesis of polymer block (A-4)

Polymerization was carried out using an autoclave with a capacity of 10 L and equipped with a stirrer and a jacket for heating and cooling. 4666g of pure water, 224g of disproportionated potassium rosinate (manufactured by Harima Chemicals Group, Inc.), 36.4g of potassium hydroxide, 18.7g of sodium salt of β-naphthalenesulfonic acid formalin condensate (manufactured by Kao Corporation, product name: DEMOL N), 1119g of styrene monomer, and 6.38g of butylbenzyl trithiocarbonate were charged, the internal temperature was set to 80°C and the mixture was stirred under a nitrogen flow at 200 rpm. By adding 4.01g of 2,2'-azobis[2-(2-imidazolin-2-yl)propane] dihydrochloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight of the polymer block (A-4) was determined by analysis in the same manner as in Example 1. Analysis results are shown in Table 1.

### (Polymerization step 2) Synthesis of chloroprene-based polymer block (B-4)

After polymerization step 1, when the internal temperature has fallen to 45°C, 3230g of chloroprene monomer and 32.6g of 1,9-nonanediol diacrylate were slowly added over 2 hours to carry out polymerization. When the polymerization rate of chloroprene monomer reaches 80%, the polymerization was stopped by adding a 10% by weight aqueous solution of N,N-diethylhydroxylamine, which was a polymerization terminator, and the unreacted chloroprene monomer was removed by vacuum distillation. For the measurement of physical properties, 20 ml of the obtained latex was sampled, and the remaining latex was used to prepare a film for evaluation. The contents (% by mass) of the polymer block (A-4) and the chloroprene-based polymer block (B-4) of the chloroprene-based block copolymer were determined by analysis in the same manner as in Example 1. Analysis results are shown in Table 1.

### (Example 5) - not according to the invention

### (Polymerization step 1) Synthesis of polymer block (A-5)

Polymerization was carried out using an autoclave with a capacity of 10 L and equipped with a stirrer and a jacket for heating and cooling. 4666g of pure water, 224g of disproportionated potassium rosinate (manufactured by Harima Chemicals Group, Inc.), 36.4g of potassium hydroxide, 18.7g of sodium salt of β-naphthalenesulfonic acid formalin condensate (manufactured by Kao Corporation, product name: DEMOL N), 1113g of styrene monomer, and 28.5g of butylbenzyl trithiocarbonate were charged, the internal temperature was set to 80°C and the mixture was stirred under a nitrogen flow at 200 rpm. By adding 18.0g of 2,2'-azobis[2-(2-imidazolin-2-yl)propane] dihydrochloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight of the polymer block (A-5) was determined by analysis in the same manner as in Example 1. Analysis results are shown in Table 1.

### (Polymerization step 2) Synthesis of chloroprene-based polymer block (B-5)

After polymerization step 1, when the internal temperature has fallen to 45°C, 3182g of chloroprene monomer and 64.9g of 1,9-nonanediol diacrylate were slowly added over 2 hours to carry out polymerization. When the polymerization rate of chloroprene monomer reaches 80%, the polymerization was stopped by adding a 10% by weight aqueous solution of N,N-diethylhydroxylamine, which was a polymerization terminator, and the unreacted chloroprene monomer was removed by vacuum distillation. For the measurement of physical properties, 20 ml of the obtained latex was sampled, and the remaining latex was used to prepare a film for evaluation. The contents (% by mass) of the polymer block (A-5) and the chloroprene-based polymer block (B-5) of the chloroprene-based block copolymer were determined by analysis in the same manner as in Example 1. Analysis results are shown in Table 1.

### (Example 6)

### (Polymerization step 1) Synthesis of polymer block (A-6)

Polymerization was carried out using an autoclave with a capacity of 10 L and equipped with a stirrer and a jacket for heating and cooling. 4666g of pure water, 224g of disproportionated potassium rosinate (manufactured by Harima Chemicals Group, Inc.), 36.4g of potassium hydroxide, 18.7g of sodium salt of β-naphthalenesulfonic acid formalin condensate (manufactured by Kao Corporation, product name: DEMOL N), 1120g of styrene monomer, and 2.87g of butylbenzyl trithiocarbonate were charged, the internal temperature was set to 80°C and the mixture was stirred under a nitrogen flow at 200 rpm. By adding 1.81g of 2,2'-azobis[2-(2-imidazolin-2-yl)propane] dihydrochloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight of the polymer block (A-6) was determined by analysis in the same manner as in Example 1. Analysis results are shown in Table 1.

### (Polymerization step 2) Synthesis of chloroprene-based polymer block (B-6)

After polymerization step 1, when the internal temperature has fallen to 45°C, 3200g of chloroprene monomer and 65.31g of 1,9-nonanediol diacrylate were slowly added over 2 hours to carry out polymerization. When the polymerization rate of chloroprene monomer reaches 80%, the polymerization was stopped by adding a 10% by weight aqueous solution of N,N-diethylhydroxylamine, which was a polymerization terminator, and the unreacted chloroprene monomer was removed by vacuum distillation. For the measurement of physical properties, 20 ml of the obtained latex was sampled, and the remaining latex was used to prepare a film for evaluation. The contents (% by mass) of the polymer block (A-6) and the chloroprene-based polymer block (B-6) of the chloroprene-based block copolymer were determined by analysis in the same manner as in Example 1. Analysis results are shown in Table 1.

### (Example 7)

### (Polymerization step 1) Synthesis of polymer block (A-7)

Polymerization was carried out using an autoclave with a capacity of 10 L and equipped with a stirrer and a jacket for heating and cooling. 4666g of pure water, 224g of disproportionated potassium rosinate (manufactured by Harima Chemicals Group, Inc.), 36.4g of potassium hydroxide, 18.7g of sodium salt of β-naphthalenesulfonic acid formalin condensate (manufactured by Kao Corporation, product name: DEMOL N), 1119g of styrene monomer, and 6.38g of butylbenzyl trithiocarbonate were charged, the internal temperature was set to 80°C and the mixture was stirred under a nitrogen flow at 200 rpm. By adding 4.01g of 2,2'-azobis[2-(2-imidazolin-2-yl)propane] dihydrochloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight of the polymer block (A-7) was determined by analysis in the same manner as in Example 1. Analysis results are shown in Table 1.

### (Polymerization step 2) Synthesis of chloroprene-based polymer block (B-7)

After polymerization step 1, when the internal temperature has fallen to 45°C, 3198g of chloroprene monomer and 65.3g of 1,9-nonanediol dimethacrylate were slowly added over 2 hours to carry out polymerization. When the polymerization rate of chloroprene monomer reaches 80%, the polymerization was stopped by adding a 10% by weight aqueous solution of N,N-diethylhydroxylamine, which was a polymerization terminator, and the unreacted chloroprene monomer was removed by vacuum distillation. For the measurement of physical properties, 20 ml of the obtained latex was sampled, and the remaining latex was used to prepare a film for evaluation. The contents (% by mass) of the polymer block (A-7) and the chloroprene-based polymer block (B-7) of the chloroprene-based block copolymer were determined by analysis in the same manner as in Example 1. Analysis results are shown in Table 1.

### (Example 8)

### (Polymerization step 1) Synthesis of polymer block (A-8)

Polymerization was carried out using an autoclave with a capacity of 10 L and equipped with a stirrer and a jacket for heating and cooling. 4666g of pure water, 224g of disproportionated potassium rosinate (manufactured by Harima Chemicals Group, Inc.), 36.4g of potassium hydroxide, 18.7g of sodium salt of β-naphthalenesulfonic acid formalin condensate (manufactured by Kao Corporation, product name: DEMOL N), 1119g of styrene monomer, and 6.37g of butylbenzyl trithiocarbonate were charged, the internal temperature was set to 80°C and the mixture was stirred under a nitrogen flow at 200 rpm. By adding 4.01g of 2,2'-azobis[2-(2-imidazolin-2-yl)propane] dihydrochloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight of the polymer block (A-8) was determined by analysis in the same manner as in Example 1. Analysis results are shown in Table 1.

### (Polymerization step 2) Synthesis of chloroprene-based polymer block (B-8)

After polymerization step 1, when the internal temperature has fallen to 45°C, 3198g of chloroprene monomer and 65.3g of divinylbenzene were slowly added over 2 hours to carry out polymerization. When the polymerization rate of chloroprene monomer reaches 80%, the polymerization was stopped by adding a 10% by weight aqueous solution of N,N-diethylhydroxylamine, which was a polymerization terminator, and the unreacted chloroprene monomer was removed by vacuum distillation. For the measurement of physical properties, 20 ml of the obtained latex was sampled, and the remaining latex was used to prepare a film for evaluation. The contents (% by mass) of the polymer block (A-8) and the chloroprene-based polymer block (B-8) of the chloroprene-based block copolymer were determined by analysis in the same manner as in Example 1. Analysis results are shown in Table 1.

### (Example 9)

### (Polymerization step 1) Synthesis of polymer block (A-9)

Polymerization was carried out using an autoclave with a capacity of 10 L and equipped with a stirrer and a jacket for heating and cooling. 4666g of pure water, 224g of disproportionated potassium rosinate (manufactured by Harima Chemicals Group, Inc.), 36.4g of potassium hydroxide, 18.7g of sodium salt of β-naphthalenesulfonic acid formalin condensate (manufactured by Kao Corporation, product name: DEMOL N), 1119g of methyl methacrylate monomer, and 6.37g of butylbenzyl trithiocarbonate were charged, the internal temperature was set to 80°C and the mixture was stirred under a nitrogen flow at 200 rpm. By adding 4.01g of 2,2'-azobis[2-(2-imidazolin-2-yl)propane] dihydrochloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight of the polymer block (A-9) was determined by analysis in the same manner as in Example 1. Analysis results are shown in Table 1.

### (Polymerization step 2) Synthesis of chloroprene-based polymer block (B-9)

After polymerization step 1, when the internal temperature has fallen to 45°C, 3198g of chloroprene monomer and 65.3g of 1,9-nonanediol diacrylate were slowly added over 2 hours to carry out polymerization. When the polymerization rate of chloroprene monomer reaches 80%, the polymerization was stopped by adding a 10% by weight aqueous solution of N,N-diethylhydroxylamine, which was a polymerization terminator, and the unreacted chloroprene monomer was removed by vacuum distillation. For the measurement of physical properties, 20 ml of the obtained latex was sampled, and the remaining latex was used to prepare a film for evaluation. The contents (% by mass) of the polymer block (A-9) and the chloroprene-based polymer block (B-9) of the chloroprene-based block copolymer were determined by analysis in the same manner as in Example 1. Analysis results are shown in Table 1.

### (Example 10) - not according to the invention

### (Polymerization step 1) Synthesis of polymer block (A-10)

Polymerization was carried out using an autoclave with a capacity of 10 L and equipped with a stirrer and a jacket for heating and cooling. 4666g of pure water, 224g of disproportionated potassium rosinate (manufactured by Harima Chemicals Group, Inc.), 36.4g of potassium hydroxide, 18.7g of sodium salt of β-naphthalenesulfonic acid formalin condensate (manufactured by Kao Corporation, product name: DEMOL N), 1112g of styrene monomer, and 31.7g of butylbenzyl trithiocarbonate were charged, the internal temperature was set to 80°C and the mixture was stirred under a nitrogen flow at 200 rpm. By adding 19.9g of 2,2'-azobis[2-(2-imidazolin-2-yl)propane] dihydrochloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight of the polymer block (A-10) was determined by analysis in the same manner as in Example 1. Analysis results are shown in Table 1.

### (Polymerization step 2) Synthesis of chloroprene-based polymer block (B-10)

After polymerization step 1, when the internal temperature has fallen to 45°C, 3179g of chloroprene monomer and 64.9g of 1,9-nonanediol diacrylate were slowly added over 2 hours to carry out polymerization. When the polymerization rate of chloroprene monomer reaches 80%, the polymerization was stopped by adding a 10% by weight aqueous solution of N,N-diethylhydroxylamine, which was a polymerization terminator, and the unreacted chloroprene monomer was removed by vacuum distillation. For the measurement of physical properties, 20 ml of the obtained latex was sampled, and the remaining latex was used to prepare a film for evaluation. The contents (% by mass) of the polymer block (A-10) and the chloroprene-based polymer block (B-10) of the chloroprene-based block copolymer were determined by analysis in the same manner as in Example 1. Analysis results are shown in Table 1.

### (Comparative Example 1)

### (Polymerization step 1) Synthesis of polymer block (A-11)

Polymerization was carried out using an autoclave with a capacity of 10 L and equipped with a stirrer and a jacket for heating and cooling. 4666g of pure water, 224g of disproportionated potassium rosinate (manufactured by Harima Chemicals Group, Inc.), 36.4g of potassium hydroxide, 18.7g of sodium salt of β-naphthalenesulfonic acid formalin condensate (manufactured by Kao Corporation, product name: DEMOL N), 731g of styrene monomer, and 5.00g of butylbenzyl trithiocarbonate were charged, the internal temperature was set to 80°C and the mixture was stirred under a nitrogen flow at 200 rpm. By adding 3.14g of 2,2'-azobis[2-(2-imidazolin-2-yl)propane] dihydrochloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight of the polymer block (A-11) was determined by analysis in the same manner as in Example 1. Analysis results are shown in Table 1.

### (Polymerization step 2) Synthesis of chloroprene-based polymer block (B-11)

After polymerization step 1, when the internal temperature has fallen to 45°C, 3580g of chloroprene monomer and 73.1g of 1,9-nonanediol diacrylate were slowly added over 2 hours to carry out polymerization. When the polymerization rate of chloroprene monomer reaches 80%, the polymerization was stopped by adding a 10% by weight aqueous solution of N,N-diethylhydroxylamine, which was a polymerization terminator, and the unreacted chloroprene monomer was removed by vacuum distillation. For the measurement of physical properties, 20 ml of the obtained latex was sampled, and the remaining latex was used to prepare a film for evaluation. The contents (% by mass) of the polymer block (A-11) and the chloroprene-based polymer block (B-11) of the chloroprene-based block copolymer were determined by analysis in the same manner as in Example 1. Analysis results are shown in Table 1.

### (Comparative Example 2)

### (Polymerization step 1) Synthesis of polymer block (A-12)

Polymerization was carried out using an autoclave with a capacity of 10 L and equipped with a stirrer and a jacket for heating and cooling. 4666g of pure water, 224g of disproportionated potassium rosinate (manufactured by Harima Chemicals Group, Inc.), 36.4g of potassium hydroxide, 18.7g of sodium salt of β-naphthalenesulfonic acid formalin condensate (manufactured by Kao Corporation, product name: DEMOL N), 2853g of styrene monomer, and 6.97g of butylbenzyl trithiocarbonate were charged, the internal temperature was set to 80°C and the mixture was stirred under a nitrogen flow at 200 rpm. By adding 4.38g of 2,2'-azobis[2-(2-imidazolin-2-yl)propane] dihydrochloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight of the polymer block (A-12) was determined by analysis in the same manner as in Example 1. Analysis results are shown in Table 1.

### (Polymerization step 2) Synthesis of chloroprene-based polymer block (B-12)

After polymerization step 1, when the internal temperature has fallen to 45°C, 1498g of chloroprene monomer and 30.6g of 1,9-nonanediol diacrylate were slowly added over 2 hours to carry out polymerization. When the polymerization rate of chloroprene monomer reaches 80%, the polymerization was stopped by adding a 10% by weight aqueous solution of N,N-diethylhydroxylamine, which was a polymerization terminator, and the unreacted chloroprene monomer was removed by vacuum distillation. For the measurement of physical properties, 20 ml of the obtained latex was sampled, and the remaining latex was used to prepare a film for evaluation. The contents (% by mass) of the polymer block (A-12) and the chloroprene-based polymer block (B-12) of the chloroprene-based block copolymer were determined by analysis in the same manner as in Example 1. Analysis results are shown in Table 1.

### (Comparative Example 3)

### (Polymerization step 1) Synthesis of polymer block (A-13)

Polymerization was carried out using an autoclave with a capacity of 10 L and equipped with a stirrer and a jacket for heating and cooling. 4666g of pure water, 224g of disproportionated potassium rosinate (manufactured by Harima Chemicals Group, Inc.), 36.4g of potassium hydroxide, 18.7g of sodium salt of β-naphthalenesulfonic acid formalin condensate (manufactured by Kao Corporation, product name: DEMOL N), 1119g of styrene monomer, and 6.38g of butylbenzyl trithiocarbonate were charged, the internal temperature was set to 80°C and the mixture was stirred under a nitrogen flow at 200 rpm. By adding 4.01g of 2,2'-azobis[2-(2-imidazolin-2-yl)propane] dihydrochloride (manufactured by FUJIFILM Wako Pure Chemical Corporation, product name: VA-044) as a polymerization initiator, polymerization was started. For the measurement of physical properties, 20 ml of the obtained latex was sampled, and the remaining latex was used in the polymerization step 2. The number average molecular weight of the polymer block (A-13) was determined by analysis in the same manner as in Example 1. Analysis results are shown in Table 1.

### (Polymerization step 2) Synthesis of chloroprene-based polymer block (B-13)

After polymerization step 1, when the internal temperature has fallen to 45°C, 3263g of chloroprene monomer was slowly added over 2 hours to carry out polymerization. When the polymerization rate of chloroprene monomer reaches 80%, the polymerization was stopped by adding a 10% by weight aqueous solution of N,N-diethylhydroxylamine, which was a polymerization terminator, and the unreacted chloroprene monomer was removed by vacuum distillation. For the measurement of physical properties, 20 ml of the obtained latex was sampled, and the remaining latex was used to prepare a film for evaluation. The contents (% by mass) of the polymer block (A-13) and the chloroprene-based polymer block (B-13) of the chloroprene-based block copolymer were determined by analysis in the same manner as in Example 1. Analysis results are shown in Table 1.

### [Analysis]

### (Measurement of number average molecular weight and molecular weight distribution for polymer block (A))

The number average molecular weight and the molecular weight distribution are values in terms of polystyrene measured by gel permeation chromatography (GPC), and are measured values under the measurement conditions described below.
Device name: HLC-8320 (manufactured by Tosoh Corporation)
Column: 3 TSKgel GMHHR-H in series
Temperature: 40°C
Detection: differential refractometer
Solvent: tetrahydrofuran
Calibration curve: created using standard polystyrene (PS).

### (Glass transition temperature of polymer block (A))

The glass transition temperature was measured by the following method using a differential scanning calorimeter in accordance with JIS K 7121.

### Device name: DSC1 (manufactured by Mettler Toledo International Inc.)

Procedure: under a nitrogen flow of 50 ml/min, the temperature was raised to 120°C at a temperature rising rate of 10°C/min, kept at 120°C for 10 minutes, then cooled to -60°C, and raised to 120°C at a temperature rising rate of 10°C/min to obtain a DSC curve. From the obtained DSC curve, the glass transition temperature was defined as the temperature of the intersection point of the base line extending straightly from the high temperature side to the low temperature side and the tangent line drawn on the point that maximizes the slope of the curve on the high temperature side.

### (Measurement of content of polymer block (A) and chloroprene-based polymer block (B) of chloroprene-based block copolymer)

Measurement was performed by the following method using a pyrolysis gas chromatography and a 1H-NMR.
Pyrolysis gas chromatography device name: HP5890-II
Column: DB-5 0.25 mmφ×30m (film thickness 1.0µm)
Column temperature: 50°C(5min) → 10°C/min → 150°C → 25°C/min → 300°C
Inlet temperature: 250°C
Detector temperature: 280°C
Detector: FID
1H-NMR device name: JNM-ECX-400 (manufactured by JEOL Ltd.)

Procedure: a chloroprene-based block copolymer comprising a polymer block (A) and a chloroprene-based polymer block (B) containing no polyfunctional monomer unit was measured using a pyrolysis gas chromatography, and a calibration curve was created from the area ratio of peaks derived from the polymer block (A) and peaks derived from the chloroprene-based polymer block (B), and contents of the polymer block (A) and the chloroprene-based polymer block (B) in the chloroprene-based block copolymer obtained by 1H-NMR measurement. A sample of the chloroprene-based block copolymer precipitated by mixing the sampled latex with methanol was measured using a pyrolysis gas chromatography, and contents of the polymer block (A) and the chloroprene-based polymer block (B) in the chloroprene-based block copolymer were determined from the area ratio of peaks derived from the polymer block (A) and peaks derived from the chloroprene-based polymer block (B) by using the calibration curve created above.

### [Preparation of sample for tensile test]

### (Preparation of latex containing chloroprene-based block copolymer)

2 parts by mass of a compound obtained by butylating a condensate of ρ-cresol and dicyclopentadiene (Nocrac PBK manufactured by Ouchi Shinko Chemical Industrial Co., Ltd.) as an anti-aging agent, 0.3 parts by mass of sodium lauryl sulfate (trade name "EMAL 10", manufactured by Kao Corporation), and water were added to 100 parts by mass (in terms of solid content) of chloroprene-based block copolymer in the latex obtained in polymerization step 2 to adjust the solid content concentration of the compound to 30% by mass, and the compound was mixed at 20°C for 16 hours using a ceramic ball mill and prepared.

### (Preparation of film)

A ceramic cylinder having an outer diameter of 50 mm was immersed for 1 second in a coagulating solution obtained by mixing 62 parts by mass of water, 35 parts by mass of potassium nitrate tetrahydrate, and 3 parts by mass of calcium carbonate, and then taken out. After drying for 4 minutes, it was immersed in the latex prepared above for 2 minutes. Thereafter, it was washed with running water at 45°C for 1 minute, and heat-treated at 130°C for 30 minutes to remove moisture, thereby producing a film for tensile test (140× 150 mm, thickness: 0.2 mm).

### [Evaluation of tensile properties]

The produced film was heat-treated at 130°C for 30 minutes, and then the modulus at 25% elongation, tensile strength at break, and elongation at break were measured in accordance with JIS K 6251, and each was evaluated using the following evaluation criteria.

### (Tensile strength at break)

AA: 32 MPa or more
A: 30 MPa or more
B: more than 25 MPa, and less than 30 MPa
C: 20 MPa or more, and 25 MPa or less
D: less than 20 MPa

### (Elongation at break)

A: 800% or more
B: 600% or more, and less than 800%
C: 450% or more, and less than 600%
D: less than 450%

### (Modulus at 25% elongation)

A : more than 5.0 MPa
B : 2.5 MPa or more, and 5.0 MPa or less
C : 1.0 MPa or more, and less than 2.5 MPa
D : less than 1.0 MPa

Those having a modulus at 25% elongation of 2.5 MPa or more, a tensile strength at break of 20 MPa or more, and an elongation at break of 450% or more are judged as acceptable.

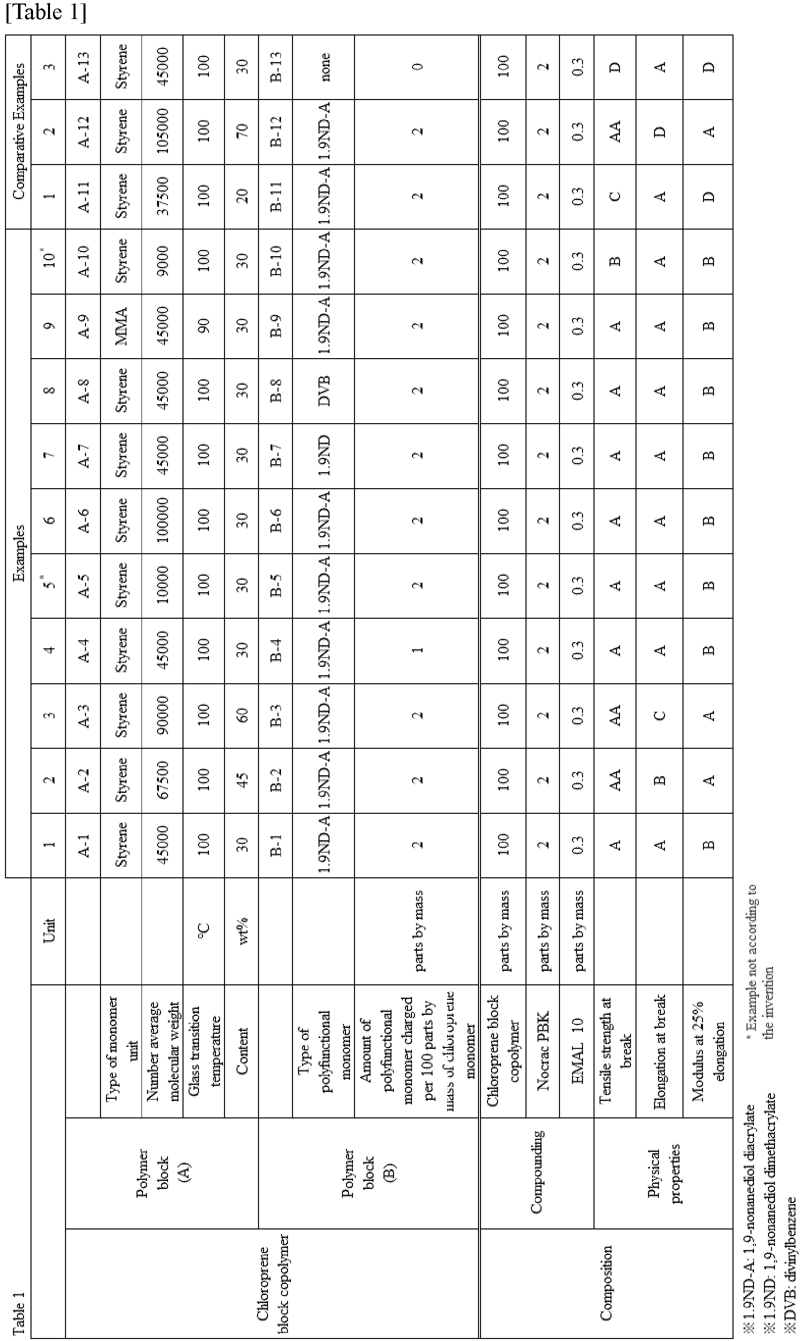

## Claims

1. A chloroprene-based block copolymer comprising 30 to 60% by mass of a polymer block (A) derived from a monomer that yields a polymer with a glass transition temperature of 80°C or higher when homopolymerized and 40 to 70% by mass of a chloroprene-based polymer block (B) having a chloroprene monomer unit and a polyfunctional monomer unit, wherein the polymer block (A) has a number average molecular weight of 30,000 or more and the number average molecular weight is a value in terms of polystyrene measured by gel permeation chromatography (GPC) according to the description.

2. The chloroprene-based block copolymer of Claim 1, wherein:
a molded body of a latex composition comprising the chloroprene-based block copolymer has a 25% modulus of 2.5 MPa or more, as measured in accordance with JIS K 6251 after being heat-treated at 130°C for 30 minutes.

3. The chloroprene-based block copolymer of Claim 1 or 2, wherein:
a molded body of a latex composition comprising the chloroprene-based block copolymer has a tensile strength at break of 20 MPa or more, as measured in accordance with JIS K 6251 after being heat-treated at 130°C for 30 minutes.

4. The chloroprene-based block copolymer of any one of Claims 1 to 3, wherein:
the polymer block (A) in addition has a molecular weight distribution of 2.0 or less and the molecular weight distribution is a value in terms of polystyrene measured by gel permeation chromatography (GPC) according to the description.

5. The chloroprene-based block copolymer of any one of Claims 1 to 4, wherein:
the polymer block (A) is a polymer block comprising an aromatic vinyl monomer unit.

6. The chloroprene-based block copolymer of any one of Claims 1 to 5, wherein:
the polyfunctional monomer is a monomer represented by chemical formula (1) or an aromatic polyene monomer and 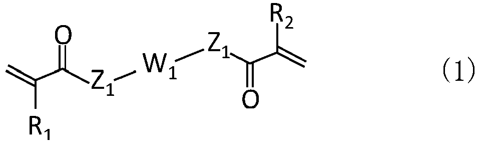
in chemical formula (1), R₁ and R₂ each independently represent hydrogen, chlorine, a substituted or unsubstituted alkyl group, a substituted or unsubstituted alkenyl group, a substituted or unsubstituted aryl group, a substituted or unsubstituted mercapto group, or a substituted or unsubstituted heterocyclyl group, W₁ represents a saturated or unsaturated hydrocarbon group, a saturated or unsaturated cyclic hydrocarbon group, a saturated or unsaturated hydrocarbon group containing a heteroatom(s), or a saturated or unsaturated cyclic hydrocarbon group containing a heteroatom(s), Z₁ represents oxygen, sulfur, or a structure represented by-NR₀-, R₀ represents hydrogen, chlorine, a substituted or unsubstituted alkyl group, a substituted or unsubstituted alkenyl group, a substituted or unsubstituted aryl group, a substituted or unsubstituted mercapto group, or a substituted or unsubstituted heterocyclyl group.

7. The chloroprene-based block copolymer of any one of Claims 1 to 6, wherein:
the chloroprene-based block copolymer has a functional group with a structure represented by chemical formula (2) or chemical formula (3); and 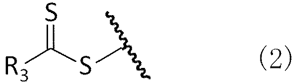
in chemical formula (2), R₃ represents hydrogen, chlorine, a substituted or unsubstituted alkyl group, a substituted or unsubstituted alkenyl group, a substituted or unsubstituted aryl group, a substituted or unsubstituted mercapto group, or a substituted or unsubstituted heterocyclyl group.

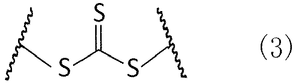

8. A latex comprising the chloroprene-based block copolymer of any one of Claims 1 to 7.

9. A latex composition comprising 100 parts by mass of the latex of Claim 8 and 0.5 to 5.0 parts by mass of an anti-aging agent.

10. A rubber composition comprising the chloroprene-based block copolymer of any one of Claims 1 to 7.

11. A rubber composition comprising the latex of Claim 8.

## Patentansprüche

1. Blockcopolymer auf Chloropren-Basis, umfassend 30 bis 60 Masse-% eines Polymerblocks (A), der von einem Monomer abgeleitet ist, das ein Polymer mit einer Glasübergangstemperatur von 80 °C oder höher ergibt, wenn es homopolymerisiert wird, und 40 bis 70 Masse-% eines Polymerblocks (B) auf Chloropren-Basis mit einer Chloropren-Monomereinheit und einer polyfunktionellen Monomereinheit, wobei
der Polymerblock (A) ein zahlenmittleres Molekulargewicht von 30.000 oder mehr aufweist und das zahlenmittlere Molekulargewicht ein Wert in Bezug auf Polystyrol ist, der durch Gelpermeationschromatographie (GPC) gemäß der Beschreibung gemessen wird.

2. Blockcopolymer auf Chloropren-Basis nach Anspruch 1, wobei:
ein Formkörper aus einer Latexzusammensetzung, die das Blockcopolymer auf Chloropren-Basis umfasst, nach einer Wärmebehandlung bei 130 °C für 30 Minuten einen 25 %-Modul von 2,5 MPa oder mehr aufweist, wie gemäß JIS K 6251 gemessen.

3. Blockcopolymer auf Chloropren-Basis nach Anspruch 1 oder 2, wobei:
ein Formkörper aus einer Latexzusammensetzung, die das Blockcopolymer auf Chloropren-Basis umfasst, nach einer Wärmebehandlung bei 130 °C für 30 Minuten eine Zugfestigkeit bei Bruch von 20 MPa oder mehr aufweist, wie gemäß JIS K 6251 gemessen.

4. Blockcopolymer auf Chloropren-Basis nach einem der Ansprüche 1 bis 3, wobei:
der Polymerblock (A) zusätzlich eine Molekulargewichtsverteilung von 2,0 oder weniger aufweist und die Molekulargewichtsverteilung ein Wert in Bezug auf Polystyrol ist, der durch Gelpermeationschromatographie (GPC) gemäß der Beschreibung gemessen wird.

5. Blockcopolymer auf Chloropren-Basis nach einem der Ansprüche 1 bis 4, wobei:
der Polymerblock (A) ein Polymerblock ist, der eine aromatische Vinylmonomereinheit umfasst.

6. Blockcopolymer auf Chloropren-Basis nach einem der Ansprüche 1 bis 5, wobei:
das polyfunktionelle Monomer ein durch die chemische Formel (1) dargestelltes Monomer oder ein aromatisches Polyenmonomer ist; und 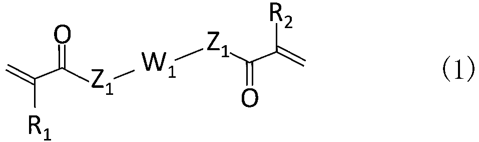
in der chemischen Formel (1) R₁ und R₂ jeweils unabhängig Wasserstoff, Chlor, eine substituierte oder unsubstituierte Alkylgruppe, eine substituierte oder unsubstituierte Alkenylgruppe, eine substituierte oder unsubstituierte Arylgruppe, eine substituierte oder unsubstituierte Mercaptogruppe oder eine substituierte oder unsubstituierte Heterocyclylgruppe darstellen, W₁ eine gesättigte oder ungesättigte Kohlenwasserstoffgruppe, eine gesättigte oder ungesättigte cyclische Kohlenwasserstoffgruppe, eine gesättigte oder ungesättigte Kohlenwasserstoffgruppe, die (ein) Heteroatom(e) enthält, oder eine gesättigte oder ungesättigte cyclische Kohlenwasserstoffgruppe, die (ein) Heteroatom(e) enthält, darstellt, Z₁ Sauerstoff, Schwefel oder eine durch -NR₀- dargestellte Struktur darstellt, R₀ Wasserstoff, Chlor, eine substituierte oder unsubstituierte Alkylgruppe, eine substituierte oder unsubstituierte Alkenylgruppe, eine substituierte oder unsubstituierte Arylgruppe, eine substituierte oder unsubstituierte Mercaptogruppe oder eine substituierte oder unsubstituierte Heterocyclylgruppe darstellt.

7. Blockcopolymer auf Chloropren-Basis nach einem der Ansprüche 1 bis 6, wobei:
das Blockcopolymer auf Chloropren-Basis eine funktionelle Gruppe mit einer durch die chemische Formel (2) oder die chemische Formel (3) dargestellten Struktur aufweist; und 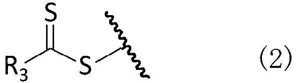
in der chemischen Formel 2 R₃ Wasserstoff, Chlor, eine substituierte oder unsubstituierte Alkylgruppe, eine substituierte oder unsubstituierte Alkenylgruppe, eine substituierte oder unsubstituierte Arylgruppe, eine substituierte oder unsubstituierte Mercaptogruppe oder eine substituierte oder unsubstituierte Heterocyclylgruppe darstellt.

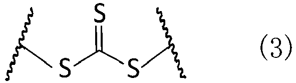

8. Latex, umfassend das Blockcopolymer auf Chloropren-Basis nach einem der Ansprüche 1 bis 7.

9. Latexzusammensetzung, umfassend 100 Masseteile des Latex nach Anspruch 8 und 0,5 bis 5,0 Masseteile eines Antialterungsmittels.

10. Kautschukzusammensetzung, umfassend das Blockcopolymer auf Chloropren-Basis nach einem der Ansprüche 1 bis 7.

11. Kautschukzusammensetzung, umfassend den Latex nach Anspruch 8.

## Revendications

1. Copolymère séquencé à base de chloroprène comprenant 30 à 60 % en masse d'un bloc polymère (A) dérivé d'un monomère qui donne un polymère ayant une température de transition vitreuse de 80 °C ou plus lorsqu'il est homopolymérisé et 40 à 70 % en masse d'un bloc polymère à base de chloroprène (B) ayant une unité monomère chloroprène et une unité monomère polyfonctionnelle,
le bloc polymère (A) ayant un poids moléculaire moyen en nombre de 30 000 ou plus et le poids moléculaire moyen en nombre étant une valeur en termes de polystyrène mesurée par chromatographie par perméation de gel (CPG) selon la description.

2. Copolymère séquencé à base de chloroprène selon la revendication 1, dans lequel :
un corps moulé d'une composition de latex comprenant le copolymère séquencé à base de chloroprène présente un module de 25 % de 2,5 MPa ou plus, mesuré conformément à la norme JIS K 6251 après avoir subi un traitement thermique à 130 °C pendant 30 minutes.

3. Copolymère séquencé à base de chloroprène selon la revendication 1 ou 2, dans lequel :
un corps moulé d'une composition de latex comprenant le copolymère séquencé à base de chloroprène présente une résistance à la rupture de 20 MPa ou plus, mesurée conformément à la norme JIS K 6251 après avoir subi un traitement thermique à 130 °C pendant 30 minutes.

4. Copolymère séquencé à base de chloroprène selon l'une quelconque des revendications 1 à 3, dans lequel :
le bloc polymère (A) présente en outre une distribution de poids moléculaire inférieure ou égale à 2,0 et la distribution de poids moléculaire est une valeur en termes de polystyrène mesurée par chromatographie par perméation de gel (CPG) selon la description.

5. Copolymère séquencé à base de chloroprène selon l'une quelconque des revendications 1 à 4, dans lequel :
le bloc polymère (A) est un bloc polymère comprenant une unité monomère vinyle aromatique.

6. Copolymère séquencé à base de chloroprène selon l'une quelconque des revendications 1 à 5, dans lequel :
le monomère polyfonctionnel est un monomère représenté par la formule chimique (1) ou un monomère polyène aromatique, et 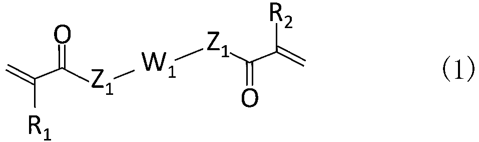
dans la formule chimique (1), R₁ et R₂ représentent chacun indépendamment l'hydrogène, le chlore, un groupe alkyle substitué ou non substitué, un groupe alcényle substitué ou non substitué, un groupe aryle substitué ou non substitué, un groupe mercapto substitué ou non substitué, ou un groupe hétérocyclyle substitué ou non substitué, W₁ représente un groupe d'hydrocarbures saturé ou non saturé, un groupe d'hydrocarbures cycliques saturé ou non saturé, un groupe d'hydrocarbures saturé ou insaturé contenant un ou plusieurs hétéroatomes, ou un groupe d'hydrocarbures cycliques saturé ou insaturé contenant un ou plusieurs hétéroatomes, Z₁ représente l'oxygène, le soufre, ou une structure représentée par-NR₀-, R₀ représente l'hydrogène, le chlore, un groupe alkyle substitué ou non substitué, un groupe alcényle substitué ou non substitué, un groupe aryle substitué ou non substitué, un groupe mercapto substitué ou non substitué, ou un groupe hétérocyclyle substitué ou non substitué.

7. Copolymère séquencé à base de chloroprène selon l'une quelconque des revendications 1 à 6, dans lequel :
le copolymère séquencé à base de chloroprène a un groupe fonctionnel avec une structure représentée par la formule chimique (2) ou la formule chimique (3) ; et 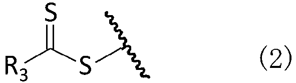
dans la formule chimique (2), R₃ représente l'hydrogène, le chlore, un groupe alkyle substitué ou non substitué, un groupe alcényle substitué ou non substitué, un groupe aryle substitué ou non substitué, un groupe mercapto substitué ou non substitué, ou un groupe hétérocyclyle substitué ou non substitué.

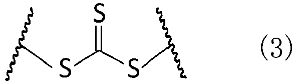

8. Latex comprenant le copolymère séquencé à base de chloroprène selon l'une quelconque des revendications 1 à 7.

9. Composition de latex, comprenant 100 parties en masse du latex de la revendication 8 et 0,5 à 5,0 parties en masse d'un agent antivieillissement.

10. Composition de caoutchouc, comprenant le copolymère séquencé à base de chloroprène selon l'une quelconque des revendications 1 à 7.

11. Composition de caoutchouc, comprenant le latex de la revendication 8.
